(19) Europäisches Patentamt
European Patent Office
Office européen des brevets

(11) **EP 1 936 541 B1**

(12) **FASCICULE DE BREVET EUROPEEN**

(45) Date de publication et mention
de la délivrance du brevet:
**30.08.2017 Bulletin 2017/35**

(51) Int Cl.:
*H02J 7/02* (2016.01)    *H02J 50/20* (2016.01)
*H02J 7/00* (2006.01)    *G06K 19/07* (2006.01)

(21) Numéro de dépôt: **06127002.1**

(22) Date de dépôt: **22.12.2006**

(54) **Chargeur de batterie fonctionnant par "tout ou rien" avec circuit de protection d'alimentation pour circuits intégrés monolithiques utilisant l'énergie de l'antenne**

Ein/aus Batterieladegerät mit Versorgungsschutzschaltung für eine monolithische integrierte Schaltung die verwendet die Energie von der Antenne

On/off battery charger with power supply protection for monolithic integrated circuits using the energy from the antenna

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**25.06.2008 Bulletin 2008/26**

(73) Titulaire: **EM Microelectronic-Marin SA**
**2074 Marin (CH)**

(72) Inventeur: **Lamothe, Christian**
**2105 Travers (CH)**

(74) Mandataire: **Goulette, Ludivine et al**
**ICB**
**Ingénieurs Conseils en Brevets SA**
**Faubourg de l'Hôpital 3**
**2001 Neuchâtel (CH)**

(56) Documents cités:
**JP-A- 2000 090 221      US-A- 5 672 952**
**US-A- 5 702 431      US-A1- 2003 017 804**
**US-A1- 2003 231 106      US-A1- 2004 227 002**
**US-A1- 2004 245 348      US-A1- 2005 068 019**
**US-A1- 2006 012 464      US-A1- 2006 128 345**
**US-A1- 2006 255 767      US-A1- 2006 265 181**
**US-B1- 6 227 204**

## Description

DOMAINE TECHNIQUE

La présente invention concerne, de manière générale, un circuit intégré monolithique radiofréquence comprenant une antenne pour la réception de signaux radiofréquences, une batterie rechargeable et un chargeur de batterie intégré dans ce circuit monolithique utilisant les signaux radiofréquences pour charger la batterie. L'invention concerne plus particulièrement le chargeur de batterie fonctionnant par "tout ou rien" intégré dans ce circuit monolithique.

ARRIERE-PLAN TECHNOLOGIQUE

Il est connu dans l'art antérieur de manière générale des circuits radiofréquences comprenant une antenne recevant des signaux radiofréquences et alimenté par une batterie rechargeable. Il est également connu pour éviter le démontage de cette batterie pour la recharger, d'incorporer un chargeur de batterie utilisant l'énergie reçue via les signaux radiofréquences.

Un exemple est donné, en particulier dans le document US 6 249 212, qui décrit un circuit radiofréquence, représenté à la figure 7, sur lequel le montage en pont 111 formé par des diodes à jonction PN permet de récupérer l'énergie reçue de signaux radiofréquences émis par un lecteur distant.

Le condensateur 117 sert au filtrage des harmoniques pour la récupération de la composante continue de l'énergie. La résistance 121 permet de décharger le condensateur 117 en l'absence de champ électromagnétique. La constante de temps créée par le condensateur 122 et la résistance 123 permet de fournir un signal au circuit afin de l'informer de la présence du champ.

La diode 115 permet d'emmagasiner l'énergie dans la batterie 113 qui alimente le reste du circuit et d'éviter que cette batterie se vide en l'absence de champ, c'est-à-dire quand le niveau de tension apporté à la batterie serait plus bas que le niveau de charge de la batterie. Ainsi dans ce schéma, la fonction de charge de la batterie est accomplie par la diode 115. Ce chargeur de batterie se limite donc à une simple diode.

Un tel chargeur de batterie présente de nombreux inconvénients. Le composant diode à jonction PN dont les deux connecteurs peuvent être connectés librement n'est pas disponible ou mal caractérisé en technologie intégrée. Il y a donc à la base un problème de disponibilité ou de caractérisation du composant.

De plus, la tension de charge de la batterie doit être comprise dans des limites relativement précises or, la tension de charge fournie par une diode dépend de la tension appliquée sur l'anode de cette dernière, la cathode étant ici connectée à la batterie. Il s'en suit donc qu'avec des tensions dont l'amplitude varie fortement comme dans le cas de notre application, c'est-à-dire pouvant dépasser 8V, il est impossible d'utiliser une batterie à grande capacité comme cela est souhaitable. On pourrait tout au plus utiliser ce genre de montage à une diode dans le cas de la recharge d'un super condensateur, élément qui a une capacité de stockage nettement plus faible mais qui tolère une plus grande variation de tension de charge. Une autre alternative serait de calibrer la distance d'utilisation du circuit afin d'éviter une surtension et donc une surcharge mais, c'est typiquement le genre de contrainte que l'on ne veut pas imposer à l'utilisateur. Ainsi, l'utilisation d'un tel chargeur de batterie à une diode entraîne directement un problème de durée de vie et de fiabilité de la batterie.

En outre, la diode présente encore le défaut de ne pas permettre une charge à courant calibré. En effet, le courant dans une diode varie exponentiellement en fonction de la tension à ses bornes et donc présente de fortes variations. Ne pouvant être calibré, le courant entraîne ici également un problème de durée de vie et de fiabilité de la batterie dans le cas considéré ici.

Un tel montage à diode présente encore un inconvénient lié au fait que les caractéristiques courant-tension et, par conséquent, la tension de charge finale de la batterie varie fortement avec la température. Approximativement le courant double tous les 10°C pour une jonction au silicium, ce qui ne peut être toléré avec les contraintes actuelles de bon fonctionnement dans des plages de température élargies.

Une autre exigence à remplir est d'avoir un signal qui indique quand la charge de la batterie est terminée. En fait, en n'utilisant qu'une simple diode en tant que chargeur de batterie, cette indication de fin de charge de la batterie ne peut pas être fournie physiquement par la diode. De plus le moment où la diode ne charge plus la batterie n'est pas clairement défini. En effet, la caractéristique courant-tension est exponentielle, ce qui veut dire que le courant de charge décroît au fur et à mesure que la batterie se charge, mais cela ne veut pas dire qu'il s'annule. Ainsi, selon le niveau de courant de charge pour une tension donnée à l'anode de la diode il y aura une tension au niveau de la cathode présentant une forte variation. Par exemple, pour un courant évoluant de 15uA à 500nA, on peut avoir une variation de tension au niveau de la batterie de l'ordre de 400mV, ce qui n'est pas tolérable pour la plupart des applications.

Il est également connu de l'art antérieur, en particulier des documents US 2005/0194926 A1 et GB 2 372 534, des chargeurs de batterie sans fil permettant de recharger des batteries sans nécessiter une recharge traditionnelle filaire. Pour cela, il est prévu que les batteries soient équipées au moyen d'un chargeur de batterie sans contact utilisant l'énergie reçue d'un signal porteur radiofréquence délivré par un émetteur distant. Toutefois, aucune indication concrète n'est donnée quant à la réalisation pratique d'un tel chargeur de batterie sans fil, en particulier sur la possibilité de l'intégrer directement dans un circuit intégré monolithique.

Ainsi, toutes les solutions de l'art antérieur présentées ci-dessus ne sont pas applicables, soit en raison des nombreux inconvénients qu'elles engendrent, soit en raison de l'absence de solution concrète permettant de les mettre en oeuvre de manière efficace.

Un des problèmes qui se pose ici est donc la réalisation d'un chargeur de batterie sans contact incorporé dans un circuit intégré radiofréquence monolithique, utilisant l'énergie reçue par une antenne, tirée de signaux radiofréquences émis par un émetteur distant pour recharger la batterie du circuit. Les composants externes au circuit intégré monolithique se limitent aux antennes, aux condensateurs de découplage des différentes tensions internes d'alimentation et à la batterie rechargeable. Le chargeur de batterie doit donc être conçu dans la même technologie que le circuit dans lequel il est intégré et ne doit pas utiliser de composant externe afin d'utiliser un nombre réduit de composants dans l'application finale.

Plus particulièrement, le problème consiste à allonger la durée de vie d'une telle batterie tout en optimisant sa recharge, y compris le temps de charge. Dans le cadre de la présente invention, il a été mis en lumière deux effets susceptibles de réduire sensiblement la durée de vie d'une batterie. Le premier point concerne la surcharge de la batterie, i.e. c'est-à-dire les périodes de charge lorsque la batterie est déjà complètement chargée. Le second point concerne le courant de charge appliqué aux bornes de la batterie pendant les périodes de recharge. Ce courant ne doit pas dépendre du niveau de charge de la batterie de manière à assurer un temps de charge convenable. D'autre part, ce courant ne doit pas présenter des pics de courant susceptibles d'endommager gravement la batterie. En effet, la durée de vie d'une batterie dépend non seulement de la valeur de la tension de fin de charge, toute surcharge étant néfaste mais aussi de la valeur du courant de charge utilisé pour la recharger. Un courant trop important en réduit la durée de vie. Ce risque apparaît particulièrement dans le cas d'une batterie déchargée à laquelle on applique une tension de charge égale à sa tension nominale sans élément limitatif de courant. Ce courant de charge peut prendre alors des valeurs excessives. En revanche, le fait d'ajouter un élément limitatif du courant maximum de type résistif, c'est-à-dire un courant de charge proportionnel à la tension aux bornes de cet élément conduit à un courant de charge qui diminue tout au long de la charge de la batterie ce qui rallonge d'autant la durée de la charge de la batterie, ce qui n'est évidemment pas souhaitable non plus.

RESUME DE L'INVENTION

Un des enjeux principaux réside donc dans la difficulté à pouvoir remplir certaines performances pour le chargeur de batterie, qui ne sont pas évidentes à concilier dans le cas de l'utilisation de circuits intégrés monolithiques. Parmi ces contraintes, on retrouve la contrainte de place qui nécessite de s'affranchir de l'utilisation de composants externes pour le chargeur de batterie. On retrouve aussi, des contraintes de précision et de fiabilité, tant au niveau de la tension de fin de charge de la batterie qui doit être bien définie, que de l'intensité du courant de charge pour éviter d'endommager la batterie.

Ainsi, afin d'éviter la surcharge de la batterie, quelque soit le niveau d'énergie reçue par le circuit, le chargeur de batterie doit fournir une tension de fin de charge aussi précise que celle définie par le fabricant de batteries et dans une plage de températures couvrant largement la gamme d'utilisation de la batterie. En outre, pour éviter les deux problèmes précités, le chargeur de batterie se comportera comme un générateur de courant à peu près constant qui arrête la charge lorsque la tension de fin de charge est atteinte. Dans le cas d'énergie pulsée on considèrera l'amplitude maximum des impulsions de courant comme devant être à peu près constante.

L'un des buts principaux de la présente invention est donc de pallier aux inconvénients et contraintes susmentionnés en réalisant un circuit intégré radiofréquence comprenant une antenne pour la réception de signaux radiofréquences, une batterie rechargeable et un chargeur de batterie utilisant les signaux radiofréquences pour charger la batterie. Le circuit est caractérisé : En ce que le chargeur de batterie est intégré dans le même substrat que le circuit intégré radiofréquence et ; en ce que le chargeur de batterie comprend des moyens de calibration, une source de courant calibrée par les moyens de calibration et délivrant un courant de charge d'intensité maximale constante, tiré des signaux radiofréquences reçus et un comparateur entre une grandeur de référence représentative du niveau de fin de charge de la batterie et une grandeur variable représentative du niveau de charge de la batterie, fournissant en sortie un signal de commande pour charger ou non la batterie.

Ainsi les points importants à satisfaire pour un tel chargeur de batterie sans contact intégré dans un circuit intégré radiofréquence, sont satisfaits, à savoir d'être intégré dans un circuit monolithique sans utiliser de composant externe, d'assurer une tension précise de fin de charge de la batterie en évitant les surcharges, quelque soit le niveau de l'énergie reçue et la température à laquelle se produit la charge, et d'assurer la charge avec un courant calibré à peu près constant pendant toute la durée de la charge de la batterie.

Un autre but de la présente invention consiste à surmonter la contrainte de flexibilité d'emploi de différents types de batterie, c'est-à-dire de pouvoir utiliser plusieurs types de batterie, voire à l'extrême de s'affranchir d'user de la batterie pour l'application finale, tout en gardant le même type de circuit intégré. A cet effet, il est prévu de pouvoir ajuster la grandeur de référence représentative du niveau de fin de charge de la batterie en fonction du type de batterie utilisée. De plus, il est prévu avantageusement que le chargeur de batterie prenne son énergie pour fonctionner directement des signaux radiofréquences et non de la batterie, ce qui permet d'assurer un démarrage rapide de la charge tout en offrant un plus grand choix encore pour le type de batterie utilisable.

Un autre but encore de la présente invention consiste à assurer dans la mesure du possible la fonction principale du circuit intégré radiofréquence, comme par exemple une fonction de communication avec l'émetteur distant fournissant les signaux radiofréquences. C'est pourquoi, il est important de s'assurer que l'énergie nécessaire pour faire fonctionner les moyens de communication avec l'émetteur distant ne soit pas utilisée pour recharger la batterie. En effet, le chargeur de batterie utilise l'énergie reçue par l'antenne. Cette énergie peut varier sensiblement suivant la distance à laquelle le circuit se trouve de l'émetteur. Cette énergie sert également pour alimenter d'autre fonction du circuit dans lequel se trouve intégré le chargeur de batterie. Dans le cas où le chargeur de batterie utiliserait une quantité d'énergie indispensable au bon fonctionnement du circuit, cette information se traduit par un niveau d'alimentation en tension du circuit qui diminue, il est alors prévu que le chargeur de batterie interrompe de lui-même la charge de la batterie jusqu'à ce que le niveau d'énergie disponible redevienne suffisant. A cet effet, il est prévu d'incorporer un circuit de surveillance de l'énergie disponible à partir des signaux radiofréquences reçus comprenant un comparateur entre l'énergie disponible moins l'énergie nécessaire pour les blocs fonctionnels du circuit avec l'énergie nécessaire pour charger la batterie. Si l'énergie n'est pas suffisante pour les deux opérations, le circuit de surveillance envoie un signal de commande pour empêcher la charge de la batterie. Cela revient à dire que le circuit de surveillance vérifie l'énergie disponible pour remettre à plus tard la charge de la batterie si l'énergie rayonnée à cet instant est insuffisante pour assurer à la fois la recharge de la batterie et le fonctionnement correct des blocs fonctionnels du circuit intégré.

On notera qu'ainsi le comparateur de tensions entre la tension de batterie et la tension de référence, agencé dans le chargeur de batterie, n'est pas perturbé par la consommation de l'énergie pour recharger la batterie dans la mesure où la batterie n'est pas chargée s'il n'y a pas assez d'énergie pour faire fonctionner le reste du circuit. De cette manière, un mauvais fonctionnement de la circuiterie dédicacée à la recharge de la batterie est évité, ce qui permet donc de toujours assurer une tension de fin de charge précise.

Selon des modes de réalisation avantageux de l'invention, il est prévu que le circuit intégré comprenne des moyens de commutation du chargeur de batterie de manière à pouvoir décider de recharger ou non la batterie ainsi que des moyens d'indication de la fin de charge de la batterie. Ceci permet de s'affranchir des contraintes d'observabilité et de gouvernabilité respectivement de la charge et du chargeur, en avertissant de la fin de charge de la batterie et en contrôlant la marche ou l'arrêt du chargeur.

Il est également prévu que le circuit intégré puisse fonctionner avec une autre source d'énergie que la batterie, par exemple provenant des signaux radiofréquences reçus. On notera à cet effet, que la batterie n'étant pas la seule source d'énergie du circuit, elle n'alimentera pas par conséquent directement tous les blocs fonctionnels du circuit intégré. Ainsi le chargeur de batterie n'est pas directement connecté entre la source d'énergie, ici l'antenne associée au circuit et l'alimentation des blocs fonctionnels du circuit. Cette disposition permet au circuit intégré de pouvoir se mettre en marche très rapidement en présence de champ si la batterie est vide et par là même de pouvoir soit utiliser des batteries de forte capacité soit de ne pas utiliser de batterie du tout et de ne rien mettre à la place dans le cas des versions meilleur marché de l'application finale.

BREVE DESCRIPTION DES FIGURES

D'autres caractéristiques et avantages de la présente invention apparaîtront plus clairement à la lecture de la description détaillée qui suit de modes de réalisation de l'invention donnés uniquement à titre d'exemple non limitatif et illustrés par les dessins annexés où :

- la figure 1 est un schéma bloc des éléments relatifs au chargeur de batterie d'un circuit intégré radiofréquence selon un mode de réalisation préféré de l'invention ;
- la figure 2 représente l'évolution du niveau de charge de la batterie en fonction de la tension d'alimentation reçue;
- la figure 3 est un schéma bloc du chargeur de batterie intégré dans le circuit radiofréquence ;
- la figure 4 est un schéma détaillé du bloc de commande du chargeur de batterie;
- la figure 4a représente une variante de réalisation de la source de courant calibrée de la figure 4 ;
- la figure 5 est un schéma détaillé du bloc de commutation du chargeur de batterie ;
- la figure 6 est un schéma bloc du circuit de surveillance de l'alimentation;
- la figure 7 représente un circuit radiofréquence selon l'art antérieur.

DESCRIPTION DETAILLEE DE L'INVENTION

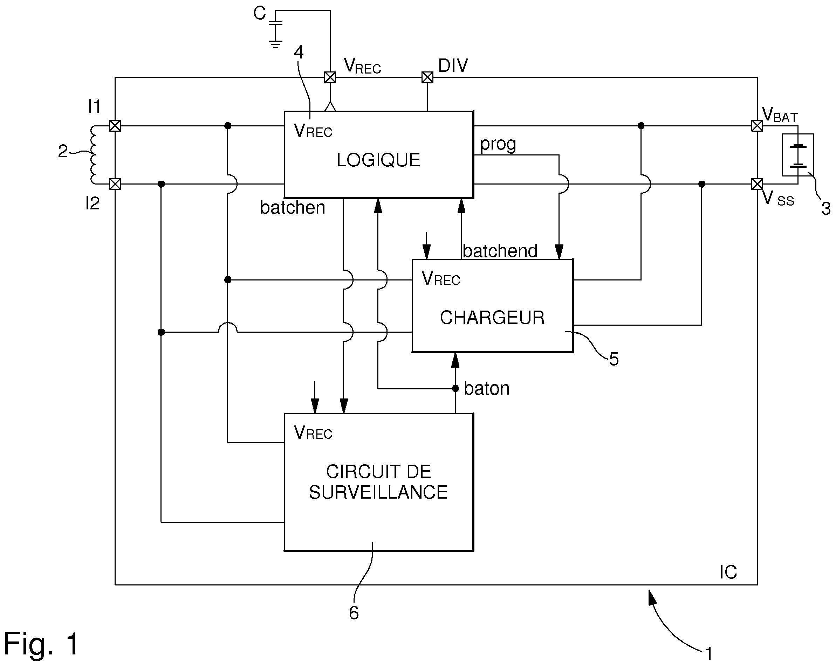

La présente invention, qui va maintenant être présentée, est donnée à titre purement illustratif et non limitatif en relation avec les figures 1 à 6. La solution proposée consiste à trouver une structure adéquate de chargeur de batterie intégré dans un circuit intégré monolithique qui réponde au cahier des charges tout en ne présentant pas les nombreux inconvénients rencontrés dans l'art antérieur. A cet effet, la structure de chargeur de batterie développée ici, fonctionne en « système tout ou rien », i.e. par commutation assurant la charge de la batterie dans le mode "ON" et n'assurant pas la charge de la batterie dans le mode "OFF".

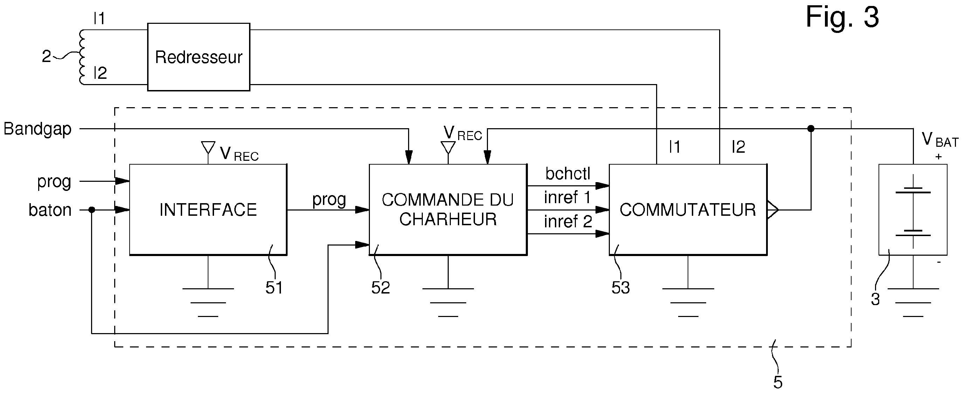

La figure 1 représente un schéma bloc d'un circuit intégré radiofréquence selon un mode de réalisation préféré de l'invention. Le circuit radiofréquence comprend un circuit intégré IC monolithique 1. Les composants externes au circuit intégré monolithique 1 se limitent à l'antenne 2 (ou aux antennes, s'il y en a plusieurs), aux condensateurs de découplage (non tous représentés) des différentes tensions internes d'alimentation et à la batterie rechargeable 3. Le circuit intégré 1 en tant que tel comprend un bloc appelé logique 4 qui ne sera pas détaillé dans le cadre de la présente invention. Ce bloc logique 4 comprend tous les éléments fonctionnels nécessaires au bon fonctionnement du circuit ainsi qu'à l'application mise en oeuvre dans ce circuit. Cette application peut être par exemple une application de type transpondeur actif permettant de communiquer avec un lecteur externe. Le circuit intégré 1 comprend en outre un chargeur de batterie conçu dans la même technologie que le circuit dans lequel il est intégré afin de ne pas utiliser de composant externe additionnel à ceux susmentionnés, ce qui réduit d'autant le nombre de composants utilisés dans l'application finale. Le chargeur de batterie comprend un premier bloc principal 5 qui s'occupe à proprement parler de la commande de la charge de la batterie et qui sera décrit plus en détail en relation avec les figures 3, 4 et 5. D'une manière générale ce bloc de commande de la charge ou bloc chargeur 5 génère un signal interne de commande ON/OFF qui commute des moyens de commutation, avantageusement réalisés sous la forme d'un simple transistor MOS travaillant en mode bloqué-saturé, pour charger ou non la batterie 3 en utilisant l'énergie reçue par le biais de l'antenne 2.

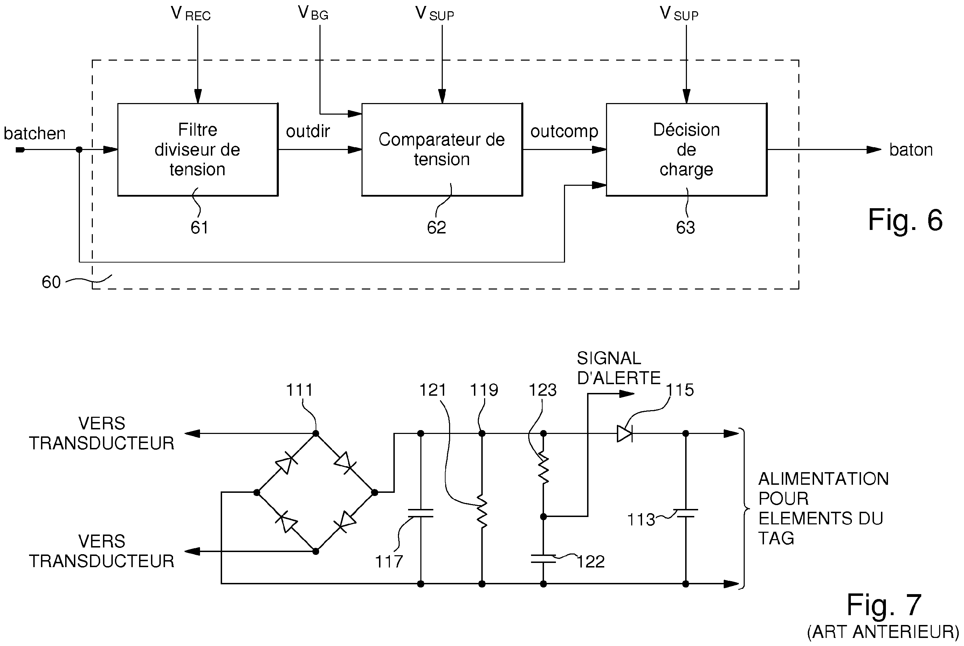

Selon un mode avantageux de réalisation, le chargeur comprend en outre un deuxième bloc 6 qui surveille la tension d'alimentation $V_{REC}$ du bloc chargeur 5 et de l'ensemble du circuit intégré et qui sera décrit plus en détail en relation avec la figure 6. D'une manière générale ce bloc de surveillance 6 vérifie si le niveau de l'énergie reçue reste supérieur à celui nécessaire pour le bon fonctionnement du circuit logique 4. Par le biais du signal de demande de mise en charge de la batterie "batchen" provenant du circuit logique 4, le bloc de surveillance 6 autorise la charge de la batterie dans le bloc chargeur 5 par le signal de commande "baton". Dans le cas contraire, i.e. si l'énergie reçue est insuffisante, le bloc de surveillance bloque l'envoi du signal de commande de charge "baton" au bloc chargeur 5. Naturellement, le bloc chargeur 5, après avoir reçu l'ordre de charger la batterie, ne l'exécute que s'il est réellement nécessaire. Dans le cas où la batterie est chargée, le bloc chargeur 5 interrompt la charge de la batterie lorsque cette dernière est chargée, et renvoie au circuit logique 4 l'information signifiant que la batterie a atteint sa tension de charge. Cette information est transmise par le signal "batchend". Ainsi donc l'autorisation et l'interdiction sont transmises par le bloc de surveillance 6 par le biais du signal de commande "baton" au bloc chargeur 5 après réception d'un signal "batchen" fourni par le bloc logique 4 indiquant qu'une charge de la batterie est souhaitée. Le bloc logique 4 est informé de la décision prise par le bloc de surveillance 6 via le signal "baton" ainsi que de l'état de charge de la batterie par le bloc chargeur 5 via le signal "batchend".

On notera encore de manière générale que dans le mode de réalisation de la présente invention tel qu'il est représenté ici, le circuit logique 4 peut être alimenté soit par la batterie 3, soit directement par le champ externe reçu au moyen de l'antenne 2 lorsque le circuit 1 se trouve à l'intérieur de ce champ.

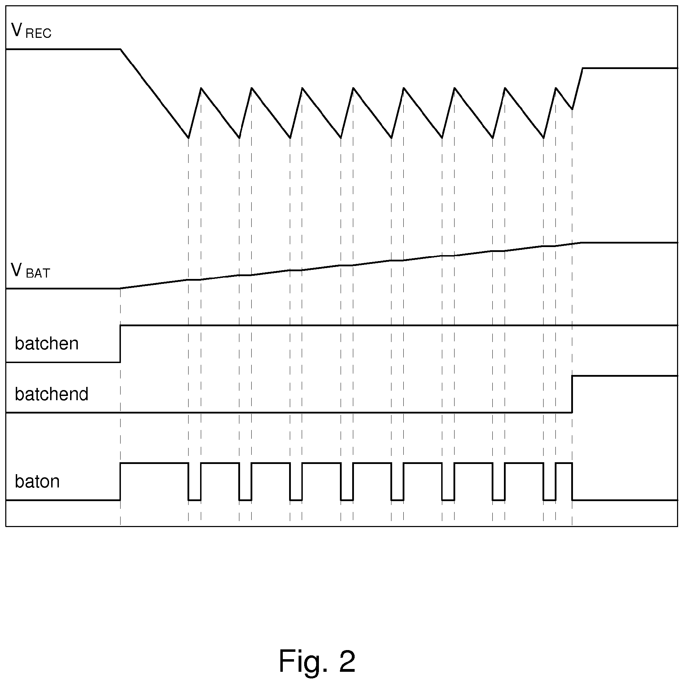

La figure 2 représente l'évolution du niveau de charge de la batterie en fonction de la tension d'alimentation reçue. Le signal $V_{REC}$ représente la tension d'alimentation rectifiée reçue par le biais de l'antenne radiofréquence. Le signal $V_{BAT}$ représente la tension de batterie. Les signaux "batchen" et "batchend" représentent respectivement le signal de commande pour charger ou non la batterie et le signal indiquant lorsque la charge de la batterie est terminée. Ainsi l'on remarque sur ce graphique que l'alimentation disponible diminue lorsque la batterie est effectivement rechargée et qu'inversement la tension d'alimentation augmente de nouveau rapidement lorsque la charge est momentanée interrompue, par le biais du signal de commande "baton" pour justement garantir une alimentation disponible minimum permettant d'assurer le fonctionnement de la logique du circuit.

Finalement, on remarque que le signal "batchend" qui indique la fin de charge de la batterie passe à la valeur logique 1, lorsque la tension de batterie atteint le niveau de charge souhaitée, comme cela sera expliqué en détail dans la suite de la description.

La figure 3 représente une vue schématique du bloc chargeur 5 de la figure 1. On retrouve en outre l'antenne 2 à laquelle un redresseur intégré est connecté à ses bornes et la batterie rechargeable 3. Le bloc chargeur 5 peut être décomposé en trois sous blocs, un bloc d'interface 51, une unité de traitement 52 et un commutateur de puissance 53.

Le bloc d'interface 51, qui est présenté ici à titre purement indicatif, permet de mettre à niveau les signaux reçus de la logique du circuit de manière à les rendre compatibles avec le niveau de la tension d'alimentation de l'unité de traitement 52 ainsi que de mettre en forme le signal de commande de la charge de la batterie envoyé par l'unité de traitement 52.

L'unité de traitement 52 qui s'occupe directement de la charge de la batterie est composée d'un comparateur de tension entre la tension de batterie elle-même et une tension de référence, et d'un circuit assimilable à une source de courant calibrée pouvant être pulsée qui remet en forme l'énergie reçue par l'antenne. Le commutateur de puissance 53 est assimilable à un interrupteur commandé par le comparateur de tension mettant en contact la batterie avec cette source d'énergie.

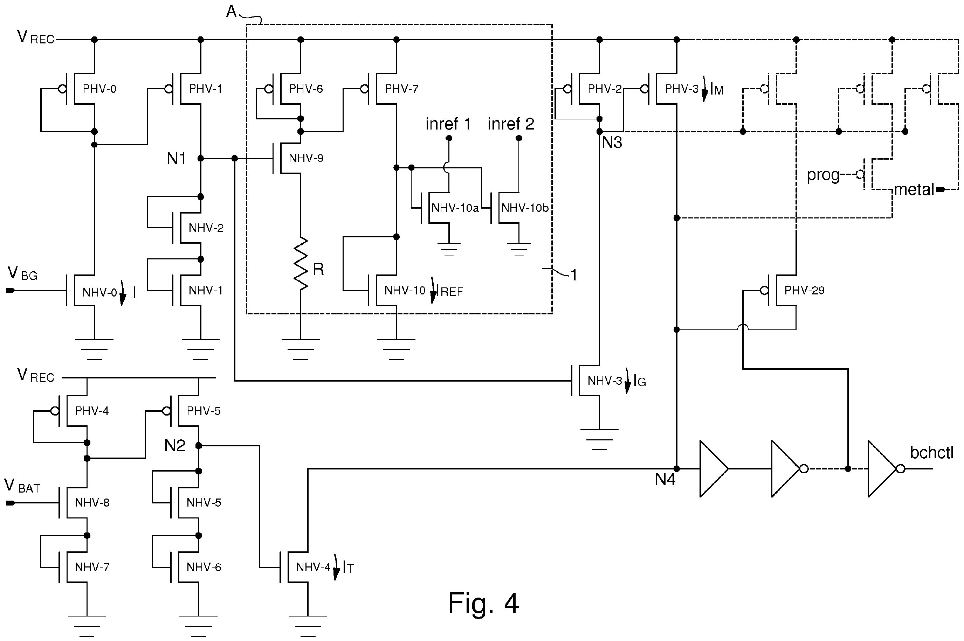

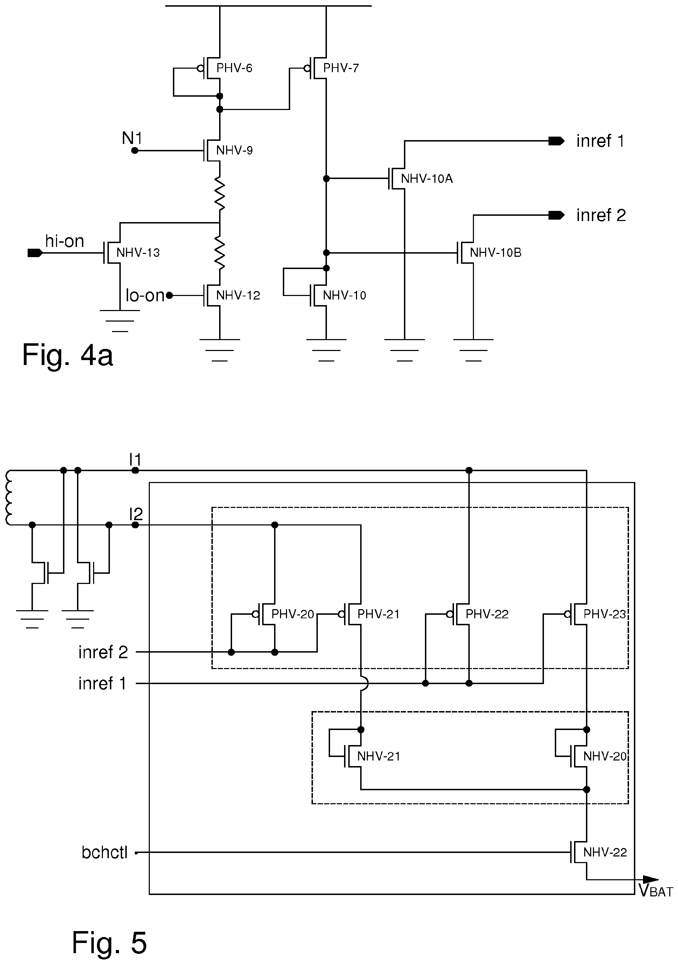

Plus particulièrement, l'unité de traitement 52 est chargée d'une double tâche consistant, d'une part, à contrôler la tension de la batterie pour commander la charge ou non de la batterie, et d'autre part, à calibrer le courant de charge utilisé. Pour ces deux tâches, une tension de référence à barrière de potentiel, ou "bandgap" selon la terminologie anglaise communément adoptée, est avantageusement utilisée comme cela sera décrit plus en détail à la figure 4. L'unité de traitement 52 fournit en sortie au moins deux signaux, un premier signal de commande "bchctl" pour indiquer s'il faut charger ou non la batterie et au moins un deuxième signal "$I_{REF}$" sous forme d'un courant calibré permettant de commander le courant de charge tiré des signaux radiofréquences reçus par le biais de l'antenne 2. Avantageusement, il est prévu que l'unité de traitement 52 fournisse deux signaux de courant calibré, un courant calibré d'intensité faible et un courant calibré d'intensité plus élevée. En outre selon la variante avantageuse comprenant l'utilisation d'un circuit de surveillance de l'alimentation, il est prévu que l'unité de traitement 52 reçoive un signal de commande "baton" de ce circuit de surveillance indiquant si l'énergie est suffisante ou non pour réaliser la charge lorsque celle-ci est requise. Si l'énergie est insuffisante la charge est momentanément interrompue jusqu'à ce que l'énergie redevienne suffisante par le biais du signal de commande "bchctl" envoyé au commutateur de puissance 53.

Le commutateur de puissance 53 est connecté, d'une part, aux bornes de l'antenne I1 et I2 de manière à recevoir l'énergie nécessaire pour la charge de la batterie et, d'autre part, à la borne positive de la batterie $V_{BAT}$ de manière à fournir le courant de charge nécessaire quand cela est requis. La commande du commutateur 53 est donc effectuée au moyen du signal de commande "bchctl" envoyé par l'unité de traitement. Lorsque le commutateur est "ON", i.e. le signal "bchctl" requiert une charge de la batterie, le courant de charge est tiré depuis l'une ou l'autre borne de l'antenne à la condition que la tension sur l'une de ces bornes est supérieure à la tension de batterie. Lorsque ce n'est pas le cas, il est prévu de moyens pour prévenir la décharge de la batterie dans l'antenne comme cela sera décrit plus en détail à la figure 5. L'intensité du courant de charge $I_{REF}$ est commandée par l'un des signaux de courant de référence envoyé par l'unité de traitement 52.

La figure 4 est un schéma détaillé du bloc de commande du chargeur de batterie 52, i.e. de l'unité de traitement brièvement décrite en relation avec la figure 3. Comme il a été mentionné précédemment l'unité de traitement du chargeur de batterie réalise essentiellement deux fonctions: celle de comparateur de tension entre la tension de la batterie et une tension de référence; et celle de source de courant calibrée pour contrôler le courant de charge de la batterie.

Un aspect important de l'invention est donc la façon dont le comparateur du chargeur de batterie fonctionne. Il permet de comparer la tension de la batterie que l'on veut réglable avec une tension de référence sans utiliser de diviseur résistif ni capacitif et sans écouler de charge électrique ni de la batterie ni de la source de tension de référence. Pour atteindre cet objectif, la technique utilisée ici est une technique de linéarisation des équations des transistors MOS fonctionnant en mode saturé que nous allons détailler. Cette technique consiste à faire abstraction de la tension de seuil des transistors, dans cet exemple en technologie MOS, afin de permettre de faire des calculs analogiques beaucoup plus simples et quasi indépendants des variations technologiques.

Considérons maintenant plus en détail les composants représentés à la figure 4. Soit le transistor NHV_0, dont la grille est connectée à une tension de référence à barrière de potentiel, appelée plus communément selon la terminologie anglaise tension de "bandgap", désignée $V_{BG}$, dont la source est à la masse et dont le drain est à une tension de saturation. Le principe de cette méthode repose sur la similitude des composants et donc des lois qui les gouvernent, méthode fréquemment utilisée dans le domaine des circuits intégrés monolithiques. On obtient ainsi le courant qui traverse le transistor NHV_0:

$$I = \tfrac{1}{2}.K.S \left(V_{BG} - V_T\right)^2 \qquad\qquad [EQ.1]$$

où K est la mobilité, S le facteur de forme du transistor NHV_0 et $V_T$ sa tension de seuil.

Ce courant I est recopié par un miroir de courant, formé par les transistors PHV_0 et PHV_1, de sorte qu'une fraction, un quart dans l'exemple pris ici, de ce courant traverse une série de deux transistors identiques NHV_2 et NHV_1 au transistor NHV_0 utilisé. Ce courant s'écrit alors :

$$I/4 = \tfrac{1}{2}.K.S \left(V_2 - V_T\right)^2 \qquad\qquad [EQ. 2]$$

où $V_2$ est la tension sur la grille de NHV_1.

En combinant les équations [EQ. 1] et [EQ. 2], on obtient l'équation suivante :

$$2.V_2 = V_{N1} = V_{BG} + V_T \qquad\qquad [EQ. 3]$$

où par construction $2.V_2$ représente la tension $V_{N1}$ sur la grille du transistor NHV_2 au niveau du noeud N1.

A ce niveau, la tension $V_{N1}$ est utilisée pour deux objectifs, d'une part, pour créer un courant de référence qui sert à calibrer le courant de charge de la batterie, et d'autre part, une tension de référence qui sert de comparaison avec une tension représentative de la tension de batterie pour définir la fin de charge de la batterie.

Nous allons considérer dans un premier temps les moyens mis en oeuvre pour la création d'un courant de référence servant à calibrer le courant de charge. Le transistor NHV_9 est choisi avec un facteur de forme très élevé, par exemple de l'ordre de 160 S, de sorte que la tension entre la source et la grille de ce transistor NHV_9 est très proche de la tension de seuil $V_T$. Ainsi, la connexion de la tension $V_{N1}$ sur la grille du transistor NHV_9 dont la source est connectée à une résistance R, elle-même reliée à la masse, donne la distribution de tension suivante:

- $V_{BG} + V_T$ au niveau de la grille du transistor NHV_9; et donc
- $V_{BG}$ au niveau de la source de ce même transistor NHV_9 ainsi qu'aux bornes de la résistance R, la chute de tension étant $V_T$ entre la grille et la source.

On a donc une résistance R qui présente à ses bornes une différence de potentiel $V_{BG}$, quasi indépendante de la technologie. Cette résistance R est donc parcourue par un courant $I_{REF}$ indépendant de la tension de seuil des transistors MOS utilisés. Il vient donc la relation suivante :

$$I_{REF} = V_{BG} / R \qquad\qquad [EQ.4]$$

Comme mentionné précédemment, ce courant de référence $I_{REF}$ servira à calibrer le courant de charge de la batterie. Il est prévu de préférence un miroir de courant additionnel formé par les transistors PHV_6 et PHV_7, commandant le courant traversant le transistor NHV_10 qui permet de commander les transistors NHV_10A et NHV_10B fournissant le courant de référence aux bornes inref1 et inref2 pour chacune des connexions de l'antenne au commutateur qui sera décrit plus en détail en relation avec la figure 5.

Selon une variante avantageuse, la partie A encadrée en pointillés, est remplacée par celle représentée à la figure 4a, dans laquelle il est prévu de pouvoir s'adapter plus facilement aux différents types de batterie du marché. Pour cela deux niveaux courants de références sont obtenus par le biais d'une résistance programmable via les transistors NHV_13 et NHV_12 commandés par un signal de charge respectivement hi_on et lo_on. De cette manière, deux courants de référence s'écoulant vers la masse sont disponibles au niveau des connexions inref1 et inref2. Chacun de ces courants permet de calibrer le courant de charge provenant des connecteurs L1 et L2 de l'antenne réceptrice.

Considérons maintenant, le deuxième objectif à réaliser par l'unité de traitement, à savoir la création d'une tension de référence pour définir la fin de charge de la batterie. Pour cela, il est prévu la création d'un courant intermédiaire $I_G$ en polarisant la grille d'un transistor NHV_3 fonctionnant en saturation (via le transistor PHV_2) avec la tension $V_{N1}$ appliquée à sa grille. Ce courant s'écrira donc :

$$I_G = ½.K.S\ (V_{N1} - V_T)^2 = ½.K.S.V_{BG}^2 \qquad\qquad [EQ. 5]$$

On obtient ainsi un courant $I_G$ qui ne dépend plus de la tension de seuil $V_T$ des transistors utilisés.

Il est prévu de procéder de la même manière du côté de la tension de batterie $V_{BAT}$. En connectant en série les transistors NHV_7 et NHV_8, cela permet avantageusement de diviser par deux la tension de la batterie $V_{BAT}$. En effet, l'intérêt ici de diviser par deux la tension de la batterie est de pouvoir comparer des valeurs de tension relativement proches. Dans cet exemple, la tension de référence "bandgap" est de l'ordre de 1,2V et la tension de la batterie divisée par deux est de l'ordre de 1,7V, ce qui est toujours préférable quand on réalise des montages qui utilisent la similitude des composants. Ainsi, avec la même méthode de linéarisation mise en oeuvre cette fois-ci au moyen des transistors NHV_6 et NHV_5 on obtient au noeud N2 une tension $V_{N2}$ de la forme suivante :

$$V_{N2} = V_{BAT}/2 - V_T \qquad\qquad [EQ. 6]$$

En appliquant la tension $V_{N2}$ à la grille d'un transistor NHV_4 travaillant en saturation on obtient le courant $I_T$ le traversant suivant :

$$I_T = \frac{1}{2}.K.S.(V_{N2} - V_T)^2 = \frac{1}{2}\,K.S.(V_{BAT}\,/\,2)^2 \qquad\qquad [EQ.\ 7]$$

Ainsi de la même manière on obtient un courant $I_T$ qui ne dépend plus de la tension de seuil des transistors utilisés. L'idée derrière ces traitements des tensions de "bandgap", d'une part, et de batterie d'autre part, est de pouvoir les comparer pour définir la fin de charge de la batterie. Il est donc prévu ici de comparer les courants $I_G$ issu du transistor NHV_3 et $I_T$ issu du transistor NHV_4 qui est représentatif du niveau de charge de la batterie. Afin de rendre le courant $I_G$ issu du transistor NHV_3 représentatif du niveau de fin de charge de la batterie, il est prévu des moyens d'ajustement de la tension de commutation, i.e. la tension pour laquelle il y a égalité entre le courant représentatif du niveau de fin de charge et celui représentatif du niveau de charge de la batterie, par exemple via un miroir de courant programmable. Pour ce faire on utilise le miroir de courant formé au moins par les transistors PHV_2 et PHV_3. Le transistor PHV_2 est celui qui contrôle le miroir de courant. Il définit donc la tension de référence d'une série programmable de transistors (représentés en pointillés) dont les grilles sont connectées à son drain et à sa grille au noeud N3. Les courants ainsi mirés provenant des drains de ces transistors programmables s'additionnent au noeud N4 avec celui qui traverse le transistor PHV_3 en sortie du miroir. La somme de ces courants en provenance des différents transistors du miroir de courant est appelée $I_M$. Ce courant recopié $I_M$ est identique au courant de contrôle $I_G$ avec un facteur multiplicatif programmable M du rapport du miroir de courant, on peut donc écrire :

$$I_M = M.I_G \qquad\qquad [EQ.\ 8]$$

Il est prévu ensuite de connecter ensemble au niveau du noeud N4, d'une part, la sortie du miroir de courant délivrant le courant $I_M$ programmé de manière à être représentatif du niveau de fin de charge de la batterie et, d'autre part, le drain du transistor NHV_4 délivrant le courant $I_T$ représentatif du niveau de charge actuelle de la batterie, ce qui est l'équivalent électrique de deux générateurs de courant donnant l'un dans l'autre, à savoir donc les courants $I_M$ et $I_T$. De ce fait, la valeur de la tension au noeud N4 partira en butée et prendra soit une valeur proche de 0V si le courant $I_T$ est le plus grand que le courant $I_M$, soit une valeur de tension proche de la tension d'alimentation positive, si c'est le courant $I_M$ qui est le plus grand que le courant $I_T$. Ainsi, la commutation s'obtient autour de la valeur théorique de l'égalité des deux courants ce qui permet de définir la valeur pour laquelle la batterie peut être considérée comme chargée. Cette valeur s'obtient donc pour l'égalité :

$$I_T = I_M \qquad\qquad [EQ.\ 9]$$

En développant l'équation précédente, on obtient :

$$\frac{1}{2}.K.S.(V_{BAT}/2)^2 = M.\frac{1}{2}.K.S.V_{BG}^{\,2} \qquad\qquad [EQ.\ 10]$$

En simplifiant l'équation précédente et en prenant la racine carrée, on obtient la valeur de la tension de la batterie au niveau de la commutation en fonction de la tension de référence "bandgap" et du rapport du miroir de courant :

$$V_{BAT} = 2.V_{BG}.M^{\frac{1}{2}} \qquad\qquad [EQ.\ 11]$$

On retrouve donc l'information utile pour la commutation de la charge ou non de la batterie au niveau du noeud N4 que l'on remet avantageusement en forme par une chaîne d'amplificateurs. On notera que cette chaîne comprend de préférence un nombre pair d'amplificateurs inverseurs de manière à assurer d'une part une coupure franche entre les deux niveaux de tension possibles, bas et haut, sur le noeud N4, tout en conservant d'autre part le même signe pour le signal de sortie "bchctl".

On notera que dans ce cas le signal de fin de charge "batchend" est un signal intrinsèque au dispositif qu'il suffit de mettre en forme pour le rendre utilisable à l'extérieur.

En utilisant un rapport de miroir de courant M programmable on peut autoriser une certaine dispersion sur la tension de référence "bandgap" ainsi qu'une certaine dispersion sur les composants utilisés. En effet grâce à la programmation du rapport de miroir on peut corriger les décalages introduits par les dispersions précitées. De cette manière, on peut avoir une plage de réglage aussi large que souhaitée ce qui permet d'utiliser différents types de batteries.

De préférence, il est prévu de faire varier le rapport du miroir de courant pour introduire une hystérèse lors de la commutation de sorte que deux points de commutations existent. Le commutateur devient alors un commutateur à hystérèse de type trigger. Ici l'hystérèse est introduite par le transistor PHV_9 qui reboucle l'information de la chaîne de sortie sur la valeur du rapport de miroir de courant.

Selon une autre variante de réalisation, il est peut être prévu en outre ou alternativement, une série de transistors programmables par masque métal afin de parfaire la mise au point de la plage de réglage.

La figure 5 est un schéma détaillé du bloc de commutation du chargeur de batterie implémenté selon l'une des variantes de réalisation présentées aux figures 4 et 4a représentant une source de courant constant de charge à un (variante de la figure 4) ou respectivement deux (variante de la figure 4a) niveaux de courant calibré donnés via les bornes de connexions inref1 et inref2.

Le comparateur, décrit précédemment et développé dans le cadre de la présente invention, fourni un signal logique qui autorise ou interdit la charge de la batterie. Ce signal appelé "bchctl" va commander directement le transistor NHV_22 du bloc de commutation. Ce transistor NHV_22 fonctionne comme un interrupteur qui permet de transférer ou non l'énergie provenant de l'antenne à la batterie, par exemple via la borne positive $V_{BAT}$ de cette dernière, afin de la recharger ou non. Les transistors PHV_20, PHV_21, PHV_22 et PHV_23 permettent de calibrer le courant de charge de l'antenne. Avantageusement il est prévu en outre des transistors NHV_20 et NHV_21 qui assurent la fonction anti-retour de l'énergie stockée dans la batterie.

On notera encore que le redresseur intégré prévu aux bornes de l'antenne peut être réalisé par exemple au moyen de deux transistors connectés comme ce la est représenté.

La figure 6 est un schéma bloc du circuit de surveillance de l'alimentation. Selon une variante avantageuse de la présente invention, une autre originalité de la présente invention réside dans l'utilisation d'un bloc qui est chargé de contrôler l'énergie à disposition. Cette information se révèle importante dans la mesure où le circuit intégré utilise des ondes électromagnétiques radiofréquences captées par une antenne dont le niveau d'énergie reçue est variable.

En effet, il a été remarqué que pour fonctionner le bloc chargeur utilise une source de tension redressée et filtrée, utilisée par d'autres fonctions du circuit intégré. Cette source de tension utilise également l'énergie provenant de l'antenne. Il y a donc une compétition entre la batterie qui prend l'énergie pour sa charge et le chargeur qui a besoin d'énergie pour fonctionner correctement. C'est l'objet du circuit de surveillance de régler le conflit en surveillant la tension d'alimentation redressée $V_{REC}$.

On notera encore à cet effet, que la tension d'alimentation $V_{REC}$ est une tension d'alimentation filtrée qui provient de la tension redressée de l'antenne. Cette tension est affectée par le niveau de l'énergie reçue, ce pourquoi, elle présente une criticité sévère qui doit être surveillée. La tension $V_{SUP}$ est une alimentation régulée pour activer les circuits logiques. Cette tension est moins sensible à l'énergie reçue et ne présente pas de criticité particulière. Le signal "batchen" est l'ordre de charger la batterie provenant de la logique du circuit intégré, cet ordre peut être reçu à n'importe quel moment même si l'énergie à disposition est insuffisante. Le signal "baton" délivré en sortie est l'ordre réellement transmis au chargeur de batterie. Il correspond au signal "batchen" complété par l'autorisation donnée par le présent circuit de surveillance 60 que nous allons détailler ci-après.

Ainsi, le circuit de surveillance 60 comprend un filtre et diviseur de tension 61 pour ramener la tension VREC à un niveau compatible avec la tension de référence "bandgap" afin d'effectuer une comparaison. Le circuit de surveillance 60 comprend en outre un comparateur 62 qui permet de savoir si le niveau de l'alimentation $V_{REC}$ est en-dessous ou au-dessus d'un seuil minimum fixé. Avantageux, un effet d'hystérèse est inclus pour éviter les hésitations au niveau de la tension de commutation. Enfin, le circuit de surveillance 60 comprend encore un bloc de décision d'autorisation ou non de la charge de la batterie qui remet en forme les signaux en combinant l'ordre de charger la batterie "batchen" provenant de la logique du circuit et de l'autorisation estimée "outcomp" par le comparateur 62. Ce bloc de décision d'autorisation de la charge 62 fournit en sortie le signal "baton" pour autoriser ou interdire la charge au chargeur de batterie.

En résumé le circuit de surveillance est chargé de contrôler la tension d'alimentation redressée $V_{REC}$. Lorsque cette tension d'alimentation décroît, mais avant d'atteindre une tension minimum limite susceptible d'empêcher le bon fonctionnement du circuit intégré, ce circuit envoie un signal "baton" de désactivation de la charge de la batterie qui est un grand consommateur de l'énergie reçue. Aussi longtemps que l'énergie à disposition est insuffisante, c'est-à-dire que le niveau de tension sur $V_{REC}$ est trop bas, alors l'ordre de charger la batterie est bloqué. De ce fait, la tension d'alimentation $V_{REC}$ disponible croît de nouveau, empêchant un dysfonctionnement du circuit intégré. Lorsque le niveau de l'alimentation redressée s'accroît suffisamment pour permettre au chargeur de fonctionner correctement, la charge est de nouveau autorisée. On notera que la tension d'alimentation est très vite régénérée, ce qui rend l'augmentation du temps de charge de la batterie, dû à cette interruption momentanée, tout à fait acceptable.

Au vu de la description qui a précéder on notera encore que le chargeur ainsi obtenu présente de nombreux avantages. Tout d'abord, la coupure est franche entre la période de charge de la batterie pendant laquelle l'interrupteur met en rapport entre elles la source d'énergie et la batterie à recharger et, la période pendant laquelle la batterie est chargée et donc doit être déconnectée de la source d'énergie. D'autre part, l'amplitude du courant reste constante tout au long de la charge de la batterie, comme défini par la source de courant calibrée remettant en forme l'énergie reçue par l'antenne. Il en résulte une durée de charge de batterie fortement raccourcie. D'autre part encore, le comparateur de tension qui décide de la fin de charge n'est pas influencé par la consommation sur la batterie et donc le réglage de la tension de fin de charge est beaucoup plus précis. Enfin, par construction ce chargeur de batterie délivre tout naturellement le signal "batchend" qui indique la fin de la charge puisqu'il s'agit du signal même qui coupe l'interrupteur de charge de la batterie. Par conséquent il est facile de faire le réglage de la fin de charge, ce signal de fin de charge pouvant alors servir d'indicateur. En outre, différents moyens d'ajustement permettent un réglage facile de la tension de charge de la batterie pour différentes valeurs de la tension de référence ainsi que pour différents types de batterie. Enfin, le circuit de surveillance permet un autocontrôle du chargeur de batterie pour laisser suffisamment d'énergie à disposition pour le reste du circuit, si besoin.

On notera aussi à titre d'exemple, que la présente réalisation de chargeur de batterie sus décrit sera capable de recharger sans surcharge une batterie de type « Rechargeable Lithium Coin Battery » modèle VL de la société Panasonic dont la tension de charge est comprise entre 3,25V et 3,55V sur une plage de températures allant de -20C à +60C et dont la capacité est d'environ 2mA/H. Le Chargeur sera capable de respecter la consigne de tension sur une plage étendue de températures par exemple -40C à +85C, voire plus encore. Cette contrainte supplémentaire permet d'assurer que le chargeur de batterie satisfait à la spécification du fabricant de batteries. Le niveau de la charge final pourra être ajustable par programmation d'un mot logique. On notera qu'il est possible avec ce chargeur de batterie de l'adapter par programmation de masque métal pour l'utiliser avec d'autre type de batterie, par exemple de type ML, dont la tension est comprise entre 2.8V et 3.2V et dont la charge est voisine de 5mA/H. Toujours à titre d'exemple, la présente réalisation sera capable d'avoir deux niveaux de courants programmables l'un de forte intensité d'une valeur de 1,5mA +/-50% et l'autre de faible intensité d'une valeur de 0,75mA +/-50%.

On notera enfin, que ce type de chargeur est préférentiellement intégré dans un circuit intégré monolithique en technologie CMOS ayant le qualificatif de faible puissance de consommation (« Low Power »), par conséquent la solution développée se doit d'utiliser au mieux l'énergie reçue. Pour cela comme cela a été décrit ci-dessus, il est souhaitable que la solution finale ne fasse pas appel aux techniques de l'automatisme des systèmes asservies rebouclés, de manière à minimiser le nombre de résistances à intégrer et à limiter la consommation en courant dues aux courants de fuite des jonctions quand la fonction est mise hors service.

On comprendra que diverses modifications et / ou améliorations et / ou combinaisons évidentes pour l'homme du métier peuvent être apportées aux différents modes de réalisation de l'invention exposés ci-dessus sans sortir du cadre de l'invention défini par les revendications annexées.

**Revendications**

**1.** Circuit intégré radiofréquence (1) comprenant une antenne (2) pour la réception de signaux radiofréquences, une batterie rechargeable (3) et un chargeur de batterie (5) utilisant lesdits signaux radiofréquences pour charger ladite batterie, ledit chargeur de batterie étant intégré dans le même substrat que ledit circuit intégré radiofréquence, le circuit intégré radiofréquence (1) étant **caractérisé en ce que** ledit chargeur de batterie comprend des moyens de calibration, une source de courant calibrée par lesdits moyens de calibration et délivrant un courant de charge d'intensité maximale constante tiré des signaux radiofréquences reçus, et un comparateur entre une grandeur de référence représentative du niveau de fin de charge de la batterie et une grandeur variable représentative du niveau de charge de la batterie fournissant en sortie un signal de commande (batchend) pour charger ou non la batterie, ledit comparateur étant un comparateur de tension entre une tension de référence et une tension de batterie, ledit comparateur de tension comprenant des moyens de linéarisation des équations des transistors MOS fonctionnant en mode saturé pour transformer, d'une part, la tension de référence en ladite grandeur de référence représentative du niveau de fin de charge de la batterie et, d'autre part, la tension de batterie en ladite grandeur variable représentative du niveau de charge de la batterie, les deux grandeurs étant des courants.

**2.** Circuit intégré radiofréquence (1) selon la revendication 1, **caractérisé en ce que** ladite grandeur de référence représentative du niveau de fin de charge de la batterie est ajustable en fonction du type de batterie utilisée.

**3.** Circuit intégré radiofréquence (1) selon la revendication 2, **caractérisé en ce que** l'ajustement du niveau de fin de charge de la batterie est programmable au moyen d'un mot logique.

**4.** Circuit intégré radiofréquence (1) selon la revendication 2 ou 3, **caractérisé en ce que** l'ajustement du niveau de fin de charge est programmable par masque métal.

**5.** Circuit intégré radiofréquence (1) selon l'une des revendications 1 à 4, **caractérisé en ce que** lesdits moyens de calibration comprennent des moyens de linéarisation pour transformer ladite tension de référence en un courant de référence indépendant du niveau de charge de la batterie.

**6.** Circuit intégré radiofréquence (1) selon la revendication 5, **caractérisé en ce que** ledit courant de charge est un courant de charge pulsé dont l'amplitude maximale des impulsions est constante.

**7.** Circuit intégré radiofréquence (1) selon la revendication 5 ou 6, **caractérisé en ce que** lesdits moyens de calibration comprennent en outre une résistance programmable de sorte à pouvoir fournir en sortie deux niveaux de courant indépendants du niveau de charge de la batterie.

**8.** Circuit intégré radiofréquence (1) selon l'une des revendications 1 à 7, **caractérisé en ce qu'**il comprend un bloc logique (4) pour commander ledit chargeur de batterie et **en ce que** ledit bloc logique est alimenté par lesdits signaux radiofréquences pour assurer un démarrage rapide de la charge.

**9.** Circuit intégré radiofréquence (1) selon la revendication 8, **caractérisé en ce qu'**il comprend en outre un circuit de surveillance (6) de l'énergie disponible à partir des signaux radiofréquences reçus comprenant un comparateur entre l'énergie disponible moins l'énergie nécessaire pour ledit bloc logique (4) avec l'énergie nécessaire pour charger la batterie délivrant en sortie un signal de commande pour autoriser ou respectivement interdire la charge de la batterie suivant si l'énergie est suffisante, respectivement insuffisante.

**10.** Circuit intégré radiofréquence (1) selon l'une des revendications précédentes, **caractérisé en ce qu'**il comprend des moyens pour assurer une tension de fin de charge précise.

**11.** Circuit intégré radiofréquence (1) selon l'une des revendications précédentes, **caractérisé en ce qu'**il comprend des moyens de coupure franche entre la charge ou non de la batterie.

**12.** Circuit intégré radiofréquence (1) selon l'une des revendications précédentes, **caractérisé en ce qu'**il comprend un interrupteur pour activer ou désactiver la charge de la batterie.

**13.** Circuit intégré radiofréquence (1) selon l'une des revendications précédentes, **caractérisé en ce qu'**il comprend un indicateur de fin de charge de la batterie.

**Patentansprüche**

**1.** Integrierte Hochfrequenzschaltung (1), umfassend eine Antenne (2) für den Empfang von Hochfrequenzsignalen, eine wiederaufladbare Batterie (3) und eine Batterieladevorrichtung (5), die die Hochfrequenzsignale verwendet, um die Batterie zu laden, umfasst, wobei die Batterieladevorrichtung in dasselbe Substrat wie die integrierte Hochfrequenzschaltung integriert ist, wobei die integrierte Hochfrequenzschaltung (1) **dadurch gekennzeichnet ist, dass** die Batterieladevorrichtung Kalibrierungsmittel, eine durch die Kalibrierungsmittel kalibrierte Stromquelle, die einen Ladestrom mit konstanter maximaler Stärke liefert, der aus den empfangenen Hochfrequenzsignalen gezogen wird, und einen Komparator zwischen einer Bezugsgröße, die den Pegel vollständiger Ladung der Batterie darstellt, und einer veränderlichen Größe, die den Ladepegel der Batterie darstellt, der am Ausgang ein Steuersignal (batchend) liefert, um die Batterie zu laden oder nicht zu laden, umfasst, wobei der Komparator ein Spannungskomparator zwischen einer Bezugsspannung und einer Batteriespannung ist, wobei der Spannungskomparator Mittel zum Linearisieren von Gleichungen von MOS-Transistoren, die im gesättigten Modus arbeiten, umfasst, um einerseits die Bezugsspannung in die Bezugsgröße, die den Pegel vollständiger Ladung der Batterie darstellt, umzuwandeln und um andererseits die Batteriespannung in die veränderliche Größe, die den Ladepegel der Batterie darstellt, umzuwandeln, wobei die beiden Größen Ströme sind.

**2.** Integrierte Hochfrequenzschaltung (1) nach Anspruch 1, **dadurch gekennzeichnet, dass** die Bezugsgröße, die den Pegel vollständiger Ladung der Batterie darstellt, in Abhängigkeit vom Typ der verwendeten Batterie einstellbar ist.

**3.** Integrierte Hochfrequenzschaltung (1) nach Anspruch 2, **dadurch gekennzeichnet, dass** die Einstellung des Pegels vollständiger Ladung der Batterie mittels eines Logikwortes programmierbar ist.

**4.** Integrierte Hochfrequenzschaltung (1) nach Anspruch 2 oder 3, **dadurch gekennzeichnet, dass** die Einstellung des Pegels vollständiger Ladung über eine Metallmaske programmierbar ist.

**5.** Integrierte Hochfrequenzschaltung (1) nach einem der Ansprüche 1 bis 4, **dadurch gekennzeichnet, dass** die Kalibrierungsmittel Linearisierungsmittel umfassen, um die Bezugsspannung in einen Bezugsstrom, der von dem Ladepegel der Batterie unabhängig ist, umzuwandeln.

**6.** Integrierte Hochfrequenzschaltung (1) nach Anspruch 5, **dadurch gekennzeichnet, dass** der Ladestrom ein gepulster Ladestrom ist, dessen maximale Impulsamplitude konstant ist.

**7.** Integrierte Hochfrequenzschaltung (1) nach Anspruch 5 oder 6, **dadurch gekennzeichnet, dass** die Kalibrierungsmittel ferner einen programmierbaren Widerstand umfassen, derart, dass sie fähig sind, am Ausgang zwei Strompegel, die von dem Ladepegel der Batterie unabhängig sind, zu liefern.

**8.** Integrierte Hochfrequenzschaltung (1) nach einem der Ansprüche 1 bis 7, **dadurch gekennzeichnet, dass** sie einen Logikblock (4) umfasst, um die Batterieladevorrichtung zu steuern, und dass der Logikblock durch die Hochfrequenzsignale versorgt wird, um einen schnellen Beginn des Ladens sicherzustellen.

**9.** Integrierte Hochfrequenzschaltung (1) nach Anspruch 8, **dadurch gekennzeichnet, dass** sie ferner eine Schaltung (6) zum Überwachen der von den empfangenen Hochfrequenzsignalen verfügbaren Energie umfasst, die einen Komparator zwischen der verfügbaren Energie abzüglich der für den Logikblock (4) erforderlichen Energie und der Energie umfasst, die zum Laden der Batterie erforderlich ist, der am Ausgang ein Steuersignal liefert, um das Laden der Batterie je nachdem, ob die Energie ausreicht oder nicht ausreicht, zuzulassen oder entsprechend zu verhindern.

**10.** Integrierte Hochfrequenzschaltung (1) nach einem der vorhergehenden Ansprüche, **dadurch gekennzeichnet, dass** sie Mittel umfasst, um eine präzise Spannung bei vollständiger Ladung sicherzustellen.

**11.** Integrierte Hochfrequenzschaltung (1) nach einem der vorhergehenden Ansprüche, **dadurch gekennzeichnet, dass** sie Mittel zur scharfen Trennung des Ladens oder Nichtladens der Batterie umfasst.

**12.** Integrierte Hochfrequenzschaltung (1) nach einem der vorhergehenden Ansprüche, **dadurch gekennzeichnet, dass** sie einen Unterbrecher umfasst, um das Laden der Batterie zu aktivieren oder zu deaktivieren.

**13.** Integrierte Hochfrequenzschaltung (1) nach einem der vorhergehenden Ansprüche, **dadurch gekennzeichnet, dass** sie einen Anzeiger für den Abschluss des Ladens der Batterie umfasst.

**Claims**

**1.** Integrated radiofrequency circuit (1) including an antenna (2) for receiving radiofrequency signals, a rechargeable battery (3) and a battery charger (5) using said radiofrequency signals to charge said battery, said battery charger being integrated in the same substrate as said integrated radiofrequency circuit, the integrated radiofrequency (1) circuit being **characterized in that** said battery charger includes calibrating means, a current source calibrated by said calibrating means and delivering a charge current of constant maximum intensity drawn from the received radiofrequency signals, and a comparator between a reference quantity representative of the end of battery charge level and a variable quantity representative of the battery charge level supplying at output a control signal (batchend) for charging or not charging the battery, said comparator being a voltage comparator between a reference voltage and a battery voltage, said voltage comparator including means for equation linearization of MOS transistors operating in saturation mode to convert, on the one hand, the reference voltage into said reference quantity representative of the end of battery charge level and, on the other hand, the battery voltage into said variable quantity representative of the battery charge level, the two quantities being currents.

**2.** Integrated radiofrequency circuit (1) according to claim 1, **characterized in that** said reference quantity representative of the end of battery charge level is adjustable according to the type of battery used.

**3.** Integrated radiofrequency circuit (1) according to claim 2, **characterized in that** the adjustment of the end of battery charge level can be programmed by means of a logic word.

**4.** Integrated radiofrequency circuit (1) according to claim 2 or 3, **characterized in that** the end of charge level is metal-mask programmable.

**5.** Integrated radiofrequency circuit (1) according to any of claims 1 to 4, **characterized in that** said calibrating means include linearization means for converting said reference voltage into a reference current independent of the level of battery charge.

**6.** Integrated radiofrequency circuit (1) according to claim 5, **characterized in that** said charge current is a pulsed charge current whose maximum pulse amplitude is constant.

**7.** Integrated radiofrequency circuit (1) according to claim 5 or 6, **characterized in that** said calibrating means further include a programmable resistor in order to output two current levels independent of the level of battery charge.

**8.** Integrated radiofrequency circuit (1) according to any of claims 1 to 7, **characterized in that** said circuit includes a logic block (4) for controlling said battery charger and **in that** said logic block is powered by said radiofrequency signals to ensure that charging starts quickly.

**9.** Integrated radiofrequency circuit (1) according to claim 8, **characterized in that** said circuit further includes a circuit (6) for monitoring the energy available from received radiofrequency signals including a comparator between the available energy less the energy necessary for said logic block (4) and the energy necessary for charging the battery, delivering at output a control signal for authorising or prohibiting battery charging depending upon whether the energy is sufficient or insufficient.

**10.** Integrated radiofrequency circuit (1) according to any of the preceding claims, **characterized in that** said circuit includes means for ensuring a precise end of charge voltage.

**11.** Integrated radiofrequency circuit (1) according to any of the preceding claims, **characterized in that** said circuit includes clear interruption means between charging and not charging the battery.

**12.** Integrated radiofrequency circuit (1) according to any of the preceding claims, **characterized in that** said circuit includes a switch for activating or deactivating battery charging.

**13.** Integrated radiofrequency circuit (1) according to any of the preceding claims, **characterized in that** said circuit includes an end of battery charge indicator.

Fig. 1

EP 1 936 541 B1

Fig. 2

Fig. 3



Fig. 4

Fig. 4a

Fig. 5

Fig. 6

batchen → **Filtre diviseur de tension** → outdir → **Comparateur de tension** → outcomp → **Décision de charge** → baton

$V_{REC}$  $V_{BG}$  $V_{SUP}$  $V_{SUP}$

61  62  63  60

VERS TRANSDUCTEUR

VERS TRANSDUCTEUR

111  121  119  123  SIGNAL D'ALERTE  115  113  117  122

ALIMENTATION POUR ELEMENTS DU TAG

Fig. 7
(ART ANTERIEUR)

EP 1 936 541 B1

**EP 1 936 541 B1**

## RÉFÉRENCES CITÉES DANS LA DESCRIPTION

**Documents brevets cités dans la description**

- US 6249212 B
- US 20050194926 A1
- GB 2372534 A